# EUROPÄISCHE PATENTSCHRIFT

(11) **EP 3 313 624 B1**
(45) Veröffentlichungstag und Bekanntmachung des Hinweises auf die Patenterteilung: **24.11.2021**
(21) Anmeldenummer: 16733027.3
(22) Anmeldetag: 21.06.2016
(51) Int. Cl.: B25J 9/00, B23Q 7/00

(54) **BESCHICKUNGSSYSTEM FÜR WERKSTÜCKE**
FEEDING SYSTEM FOR WORKPIECES
SYSTÈME DE CHARGEMENT POUR PIÈCES

(30) Priorität: 29.06.2015 DE 102015110453
(43) Veröffentlichungstag der Anmeldung: 02.05.2018
(73) Patentinhaber: EasyRobotics APS, 6400 Sønderborg (DK)
(72) Erfinder: LACHENMEIER, Per, 6400 Sønderborg (DK)
(74) Vertreter: von Hirschhausen, Helge
(86) Internationale Anmeldenummer: PCT/EP2016/064326
(87) Internationale Veröffentlichungsnummer: WO 2017/001248

(56) Entgegenhaltungen:
- EP-A1- 0 673 711
- WO-A1-2013/087554
- WO-A2-2007/089269
- DE-A1- 19 805 206
- DE-A1-102005 009 283
- US-A1- 2003 012 626

## Beschreibung

Die vorliegende Erfindung betrifft ein Beschickungssystem zur Beschickung einer Vorrichtung mit Werkstücken mittels eines Roboters. Dabei weist das Beschickungssystem eine Beschickungsstation und wenigstens einen Transportwagen auf, wobei die Beschickungsstation einen Roboterbefestigungsabschnitt aufweist und so ausgebildet ist, dass in ihr ein Werkstückhalter in einer zum Roboterbefestigungsabschnitt definierten Aufnahmeposition gehalten werden kann. Aus der Aufnahmeposition heraus kann ein am Roboterbefestigungsabschnitt angebrachter Roboter die Werkstücke greifen. Der Transportwagen verfügt zudem über wenigstens eine Haltevorrichtung zur Halterung eines Werkstückhalters in einer Halteposition. Ferner betrifft die vorliegende Erfindung ein Verfahren zur Beschickung einer Vorrichtung sowie die Verwendung eines Beschickungssystems.

Beschickungssysteme werden genutzt, um Werkstücke in einer Vorrichtung automatisiert abzusetzen. Dies kann beispielsweise im Rahmen eines industriellen Produktionsprozesses oder eines Logistikprozesses erfolgen. Als Vorrichtung im Sinne dieser Anmeldung werden beispielsweise Bearbeitungsmaschinen, wie voll automatisierte Drehbänke oder Fräsmaschinen (CNC-Maschinen), verstanden. Es sollen aber auch Logistikvorrichtungen wie Paletten oder sonstige Verpackungseinheiten umfasst sein, die zum Transport von Werkstücken genutzt werden. So ermöglichen es Beschickungssysteme auch, nach der Bearbeitung eines Werkstückes dieses zu einer nächsten Bearbeitungsmaschine weiter zu befördern. Entsprechend sind Beschickungssysteme ein wichtiger Bestandteil, um eine Automatisierung der Produktions- sowie Logistikprozesse zu verwirklichen.

Gegenüber einer manuellen Beschickung von Vorrichtungen bringt die Verwendung eines Beschickungssystems den Vorteil, dass im Vergleich zu einem manuellen Einsetzen bzw. Herausnehmen der Werkstücke in die Vorrichtung bzw. aus der Vorrichtung die Wiederholungsgenauigkeit verbessert und oftmals auch die Taktung der einzelnen Arbeitsschritte verkürzt werden kann. Infolgedessen lässt sich durch die Verwendung von Beschickungssystemen manuelle Arbeit einsparen. Zusammen mit der Steigerung der Produktionsgeschwindigkeit führt dies zu einer deutlichen Reduzierung der Stückkosten eines einzelnen Werkstücks in einem Produktions- oder Logistikprozess. Durch die Verwendung von Beschickungssystemen ist es entsprechend möglich, auch in Ländern mit einem hohen Lohnniveau durch den steigenden Grad der Automatisierung wirtschaftlich zu produzieren.

Die Dokumente EP0673711A1, DE102005009283A1, US2003/012626A1, WO2007/089269A2, DE19805206A1 und WO2013/087554A1 zeigen Beschickungssysteme aus dem Stand der Technik. Nachteilig an den bisher bestehenden Beschickungssystemen ist es, dass diese nach wie vor entweder ein hohes Maß an manueller Tätigkeit erfordern, um die Werkstückhalter mit den Werkstücken in das Beschickungssystem einzusetzen, oder, falls das Einsetzen automatisiert erfolgen soll, eine sehr aufwendige Konstruktion erforderlich ist. Der Grund hierfür ist darin zu finden, dass jedes der bekannten Beschickungssystem individuell an die Eigenschaften des jeweiligen Werkstücks wie Größe, Form und Gewicht angepasst werden muss. Dies ist erforderlich, damit das Beschickungssystem ein Werkstück zuverlässig in die Vorrichtung einsetzen bzw. aus dieser wieder herausnehmen und zur nächsten Vorrichtung weiter transportieren kann. Eine Änderung des produzierten Gutes, und somit ein Austausch der bisher produzierten Werkstücke gegen andere, erfordern daher bei den bekannten Beschickungssystemen aufwendige Umbaumaßnahmen und Anpassungen der Beschickungssysteme im Produktionsprozess. Entsprechend sind die bekannten Beschickungssysteme nur für den Einsatz in Großserienproduktionen geeignet, bei denen über einen langen Zeitraum in einem jeweiligen Produktionsschritt nur identische Werkstücke bearbeitet werden und somit Änderungen am Beschickungssystem nicht erforderlich sind.

Gegenüber einer Großserienproduktion wechselt bei Klein- bzw. Kleinstserien häufig das produzierte Gut in kurzer Zeit. Hieraus resultiert entweder die Notwendigkeit, das Beschickungssystem infolge des Produktwechsels kostenintensiv umzurüsten oder ein Beschickungssystem zu wählen, bei welchem nach wie vor die Werkstücke manuell eingesetzt werden. Im Ergebnis führt dies dazu, dass bei der Fertigung von Klein- bzw. Kleinstserien das Einsetzen und Herausnehmen von Werkstückhaltern in das Beschickungssystem entweder mit einem hohen Anteil manueller Arbeit erfolgt oder hohe Umrüstkosten anfallen. Dies wiederum erhöht die Produktionskosten für die Fertigung von Klein- bzw. Kleinstserien erheblich, da an den Produktivitätszuwächsen einer automatisierten Produktion nicht partizipiert werden kann.

Der vorliegenden Erfindung liegt daher die Aufgabe zugrunde, ein Beschickungssystem zur Verfügung zu stellen, welches schnell, flexibel und kostengünstig an geänderte Werkstücke und Produktionsprozesse angepasst werden kann.

Die Lösung der Aufgabe gelingt mit einem Beschickungssystem nach Anspruch 1, einem Verfahren zur Beschickung einer Vorrichtung nach Anspruch 12, sowie der Verwendung des erfindungsgemäßen Beschickungssystems nach Anspruch 15. Vorteilhafte Weiterbildungen werden in den Unteransprüchen beschrieben.

Das erfindungsgemäße Beschickungssystem zur Beschickung einer Vorrichtung mit Werkstücken mittels eines Roboters weist somit eine Beschickungsstation und wenigstens einen Transportwagen auf. Die Beschickungsstation weist ferner einen Roboterbefestigungsabschnitt auf und ist so ausgebildet, dass in ihr ein Werkstückhalter zum Roboterbefestigungsabschnitt unverschieblich und in einer definierten Aufnahmeposition reproduzierbar gehalten werden kann, aus der heraus ein, am Roboterbefestigungsabschnitt angebrachter Roboter die Werkstücke greifen kann. Der Transportwagen verfügt über wenigstens eine Haltevorrichtung zur Halterung eines Werkstückhalters in einer Halteposition. Ferner weist die Beschickungsstation eine Ladevorrichtung auf, mit der ein Werkstückhalter indirekt aus der Halteposition in die Aufnahmeposition in der Beschickungsstation verbracht werden kann. Die Ladevorrichtung ist so ausgebildet, dass sie einen Werkstückhalter schieben und/oder ziehen kann und die Beschickungsstation weist einen Kopplungsabschnitt auf, über den der Transportwagen mit Hilfe einer Kopplungsvorrichtung so mit der Beschickungsstation koppelbar ist, dass ein im Transportwagen in der Halteposition gehaltener Werkstückhalter nach dem Koppeln des Transportwagens mit dem Kopplungsabschnitt mit einer horizontalen und/oder vertikalen Bewegung des Werkstückhalters in die Aufnahmeposition verbracht worden ist.

Das Beschickungssystem ermöglicht es, in Kombination mit einem auf dem Roboterbefestigungsabschnitt montierten Roboter, Werkstücke automatisiert einer Vorrichtung zuzuführen und gleichzeitig wirtschaftlich bei der Fertigung von Klein- bzw. Kleinstserien zu sein. Von der Erfindung sollen dabei solche Beschickungssysteme umfasst sein, welche mit bzw. ohne einen, auf dem Roboterbefestigungsabschnitt der Beschickungsstation montierten Roboter ausgeliefert werden. Es ist üblich, dass die erfindungsgemäße Beschickungsstation ohne einen auf dem Roboterbefestigungsabschnitt montierten Roboter verkauft wird, da dieser häufig erst entsprechend den Anforderungen des Kunden ausgewählt, und nach der Auslieferung durch den Kunden auf der Beschickungsstation montiert wird. Darüber hinaus kann das Beschickungssystem jederzeit auch mit einem auf dem Roboterbefestigungsabschnitt bereits montierten Roboter an den Kunden ausgeliefert werden. Unter einem indirekten Verbringen wird im Rahmen dieser Anmeldung nach dem Koppeln des Transportwagens mit dem Kopplungsabschnitt insbesondere eine horizontale und/oder vertikale Bewegung des Werkstückhalters in die Aufnahmeposition verstanden. Die Ladevorrichtung erlaubt es, Werkstückhalter in unterschiedlicher Höhe aus dem Transportwagen herauszunehmen und diese anschließend in die Aufnahmeposition zu verbringen. Hierdurch kann der Werkstückhalter in eine optimale Aufnahmeposition verbracht werden.

Charakteristisch für das Beschickungssystem ist es, dass für den Transport der Werkstücke ein oder mehrere Transportwagen verwendet werden. Diese können in ihrer einfachsten Ausführungsform manuell geschoben werden. Hierdurch lassen sich die Werkstücke einfach von einer Beschickungsstation zu einer anderen transportieren, wohingegen die zeitaufwendige Beschickung der Vorrichtung automatisiert erfolgt. Als geeignete Transportwagen kommen beispielsweise Transportwagen in der Größe einer Viertel-Euro-Palette infrage. Es sind aber auch größere oder kleinere Transportwagen denkbar, beispielsweise wenn die Abmessungen der Werkstücke oder die gewünschte Kapazität dies erforderlich machen.

Durch die Verwendung einer standardisierten Haltevorrichtung am Transportwagen lassen sich Werkstückhalter für unterschiedliche Werkstücke in den Transportwagen einsetzen. Durch die leichte Austauschbarkeit der Werkstückhalter im Transportwagen ist das Beschickungssystem einfach für den Transport unterschiedlicher Werkstücke umrüstbar. Auf dem Transportwagen wird der Werkstückhalter in der Haltevorrichtung in der Halteposition gelagert. Dies verhindert sowohl beim Transport wie auch bei einer Entnahme der Werkstücke vom Werkstückhalter ein unbeabsichtigtes Verrutschen des Werkstückhalters bzw. der darauf befindlichen Werkstücke selbst. Der Werkstückhalter selbst kann in einer einfachen Ausführung eine Box sein, in welcher sich die Werkstücke als Schüttgut oder auch geordnet befinden. Bei aufwendigen bzw. empfindlichen Werkstücken ist der Werkstückhalter in einer weiterentwickelten Ausführung so gearbeitet, dass dieser ein oder mehrere Werkstücke auch in einer bestimmten Position hält. So wird ein schonender Transport der Werkstücke sichergestellt.

Der Transportwagen wird in den Kopplungsabschnitt der Beschickungsstation herangeschoben und mithilfe einer Kopplungsvorrichtung lösbar mit dem Kopplungsabschnitt verbunden. Unter einer Kopplungsvorrichtung im Sinne dieser Anmeldung ist dabei eine Vorrichtung zu verstehen, welche den Transportwagen in einer bestimmten Stellung mit dem Kopplungsabschnitt verbindet bzw. ein Wegrollen des Transportwagens vom Kopplungsabschnitt unterbindet. Die Kopplungsvorrichtung ist weiter derart gestaltet, dass nach einem Lösen der Kopplung und einer erneuten Kopplung, der Transportwagen im Kopplungsabschnitt die gleiche Position wie zuvor einnimmt. Hierdurch bewirkt die Kopplungsvorrichtung, dass der auf dem Transportwagen gelagerte Werkstückhalter nach dem Koppeln in Bezug zu der Beschickungsstation, insbesondere gegenüber dem Roboterbefestigungsabschnitt unverschieblich und in einer definierten Aufnahmeposition reproduzierbar gelagert ist. Unter einer Aufnahmeposition ist dabei die Position des Werkstückhalters zu verstehen, in welcher der auf dem Roboterbefestigungsabschnitt montierte Roboter die auf dem Werkstückhalter gelagerten Werkstücke aufnehmen kann, bzw. auch Werkstücke auf dem Werkstückhalter absetzen kann. Da sich der Werkstückhalter nach dem Koppeln des Kopplungsabschnitts mit dem Transportwagen bereits in der definierten Aufnahmeposition befindet, entfällt zu dem ein manuelles Umsetzen des Werkstückhalters in die Aufnahmeposition.

Da die Position des Werkstückhalters bezogen auf den Roboterbefestigungsabschnitt reproduzierbar ist, können die Werkstücke vom Roboter nacheinander von mehreren gleichartigen Werkstückhaltern aufgenommen bzw. auch Werkstücke auf dem Werkstückhalter abgesetzt werden. Ein Einprogrammieren der jeweiligen Position des Werkstückhalters bzw. der darauf befindlichen Werkstücke im Roboter ist bei gleichartigen Werkstückhaltern dabei nur einmalig erforderlich. Durch das Koppeln des Transportwagens mit dem Kopplungsabschnitt wird somit die Halteposition zur Aufnahmeposition, sodass einfach in Serie produziert werden kann.

Es ist vorteilhaft, wenn der Kopplungsabschnitt wenigstens eine seitliche Führung, bevorzugt zwei seitliche Führungen, für den Transportwagen aufweist. Eine geeignete Führung ist dabei beispielsweise eine Schiene, ein Rahmenabschnitt oder auch eine seitlich angeordnete Wand, an der entlang der Transportwagen geführt wird, wenn der Transportwagen an den Kopplungsabschnitt herangeschoben wird. Eine seitliche Führung erleichtert das Koppeln zwischen dem Transportwagen sowie dem Kopplungsabschnitt erheblich, da der Transportwagen durch die seitliche Führung im Kopplungsabschnitt geführt wird.

In einer bevorzugten Ausführungsform des Beschickungssystems weist der Kopplungsabschnitt wenigstens einen stirnseitigen Anschlag auf. Ein stirnseitiger Anschlag erleichtert das Koppeln zwischen dem Transportwagen sowie dem Kopplungsabschnitt erheblich, da der Transportwagen bis zum stirnseitigen Anschlag an den Kopplungsabschnitt herangeschoben werden kann.

Vorzugsweise weist die wenigstens eine seitliche Führung wenigstens eine seitliche Führungsschiene und/oder wenigstens eine seitliche Führungsrolle auf. Die seitliche Führungsschiene und/oder seitliche Führungsrolle ist dem Kopplungsabschnitt zugewandt, an der seitlichen Führung angeordnet. Weiter ist die seitliche Führungsschiene bevorzugt aus einem Material gefertigt, durch welches die Reibung beim Hineinschieben des Transportwagens in den Kopplungsabschnitt vermindert wird. Zur Verwendung kommt vorzugsweise ein Kunststoff. Zur Verminderung eben dieser Reibung kann auch wenigstens eine seitliche Führungsrolle drehbar, bevorzugt kugelgelagert, an der seitlichen Führung angeordnet sein. Die seitlichen Rollen dienen dem Transportwagen ebenfalls als Führung während dieser in den Kopplungsabschnitt in eine Aufnahmeposition verbracht wird. Entlang der wenigstens einen seitlichen Führungsschiene und/oder wenigstens einen seitlichen Führungsrolle kann ein Transportwagen nahezu ohne Spiel zur seitlichen Führungsschiene und/oder seitlichen Führungsrolle in den Kopplungsabschnitt geschoben werden, ohne dabei an der seitlichen Führung zu reiben bzw. sich zu verkanten. Hierdurch lässt sich der Transportwagen mit einer besonders hohen Wiederholungsgenauigkeit in einer Aufnahmeposition relativ zum Roboterbefestigungsabschnitt mit dem Kopplungsabschnitt koppeln.

In diesem Zusammenhang ist es zweckmäßig, wenn die seitliche Führungsschiene und/oder die wenigstens eine seitliche Führungsrolle so ausgebildet ist, dass der Transportwagen beim Einschieben in den Kopplungsabschnitt vom Boden abgehoben wird. Dies hat den Vorteil, dass sich die Werkstücke bzw. der Werkstückhalter immer auf gleicher Höhe relativ zum Roboterbefestigungsabschnitt befindet. Ein Höhenversatz durch beispielsweise am Boden liegende Metallspäne oder -abfälle kann vermieden werden. Denkbar ist, dass hierfür eine Mehrzahl an Führungsrollen verwendet wird, die zumindest teilweise in einem ansteigenden Winkel zueinander angeordnet sind.

Sollten neben dem stirnseitigen Anschlag auch eine oder zwei seitliche Führungen vorhanden sein, werden die Bewegungsmöglichkeiten des Transportwagens im Kopplungsabschnitt durch die eine oder zwei seitlichen Führungen und den stirnseitigen Anschlag weiter eingeschränkt, sodass nach dem Heranschieben des Transportwagens in den Kopplungsabschnitt lediglich ein Herausrollen des Transportwagens aus dem Kopplungsabschnitt verhindert werden muss. Dies führt dazu, dass die Kopplungsvorrichtung besonders einfach ausgestaltet werden kann, damit der Werkstückhalter sich in der Aufnahmeposition befindet. Entsprechend wird durch eine oder zwei seitlichen Führungen und/oder das stirnseitige Anschlagelement in Verbindung mit der Kopplungsvorrichtung der Werkstückhalter besonders effektiv in einer reproduzierbaren, zum Roboterbefestigungsabschnitt definierten Aufnahmeposition fixiert.

Zweckmäßig für die Ausführung des Beschickungssystems ist es, wenn die Kopplungsvorrichtung am Kopplungsabschnitt der Beschickungsstation und/oder am Transportwagen vorgesehen ist. Als eine erfindungsgemäße Kopplungsvorrichtung kann dabei beispielsweise eine am Transportwagen befestigte Feststellbremse dienen. Weiter ist als Kopplungsvorrichtung auch ein Verriegelungsmechanismus oder dergleichen denkbar, der ein Herausrollen des Transportwagens aus dem Kopplungsabschnitt unterbindet. Eine derartige Kopplungsvorrichtung kann, vergleichbar mit einem Schlossriegel, an wenigstens einer seitlichen Führung vorgesehen sein. Darüber hinaus sind auch Kombinationen denkbar, bei denen sowohl der Kopplungsabschnitt als auch der Transportwagen eine Kopplungsvorrichtung aufweisen, die jeweils eine Bewegung des Transportwagens relativ zur Beschickungsstation verhindern. Eine solche Kopplungsvorrichtung kann beispielsweise eine Kupplung und ein entsprechendes Gegenstück sein. Die Kupplung ist beispielsweise am Kopplungsabschnitt vorgesehen und das Gegenstück am Transportwagen bzw. umgekehrt. Hierdurch lässt sich besonders effektiv sicherstellen, dass der Werkstückhalter in einer relativ zum Roboterbefestigungsabschnitt definierten Aufnahmeposition gehalten wird.

Vorteilhaft für das Beschickungssystem ist es, wenn der Transportwagen mehrere, in unterschiedlichen Höhen des Transportwagens angeordnete Haltevorrichtungen zur Halterung von Werkstückhaltern in unterschiedlichen Haltepositionen im Transportwagen aufweist. Als Haltevorrichtungen kommen beispielsweise horizontal am Transportwagen angeordnete Schienen infrage, auf denen die Werkstückhalter in der Halteposition auf dem Transportwagen positioniert sind. Hierdurch können, je nach Größe der Werkstücke, diese im Transportwagen so positioniert werden, dass die Werkstücke nach dem Koppeln des Transportwagens mit dem Kopplungsabschnitt sich in einer optimalen Aufnahmeposition befinden. Unter einer optimalen Aufnahmeposition ist dabei eine Position zu verstehen, bei welcher die Werkstücke für eine Aufnahme durch den Roboter weder zu hoch noch zu tief positioniert sind. Durch die Möglichkeit, die Werkstückhalter in verschiedene Haltepositionen am Transportwagen anzuordnen, lässt sich das Beschickungssystem sehr einfach an unterschiedlich große Werkstücke anpassen.

In einer Ausführungsform des Beschickungssystems, welche nicht zur Erfindung gehört, ist die Beschickungsstation so ausgebildet, dass durch den Kopplungsvorgang mit dem Transportwagen ein Werkstückhalter direkt in die Aufnahmeposition verbracht wird. In dieser einfachsten Ausführungsform des Beschickungssystems befindet sich ein in der Halteposition auf dem Transportwagen gelagerter Werkstückhalter nach dem koppeln des Transportwagens mit dem Kopplungsabschnitt in der definierten Aufnahmeposition.

Es ist vorteilhaft für die Ausbildung des Beschickungssystems, wenn die Ladevorrichtung so ausgebildet ist, dass sie einen Werkstückhalter anheben und/oder absenken kann. So können die Werkstückhalter beispielsweise horizontal aus der Halteposition auf dem Transportwagen entnommen werden und anschließend vertikal in die Aufnahmeposition verbracht werden. Da es hierüber auch möglich ist, Werkstückhalter in unterschiedlicher Höhe aus dem Transportwagen zu entnehmen bzw. in diesen einzusetzen, können entsprechend auch Transportwagen mit mehreren, in unterschiedlicher Höhe am Transportwagen angeordneten Werkstückhaltern mit dem Kopplungsabschnitt gekoppelt, und die Werkstückhalter nacheinander in eine Aufnahmeposition verbracht werden. Hierdurch ist es möglich den, mit einer Vielzahl von Werkstückhaltern beladenen Transportwagen, automatisiert zu entladen, die Vorrichtung mit den Werkstücken zu beschicken, oder einen mit oder ohne Werkstücken beladenen Werkstückhalter wieder auf den Transportwagen zu laden.

Weiterbildend ist die Ladevorrichtung als eigenständiges Lademodul ausgebildet, das an der Beschickungsstation, vorzugsweise direkt am Kopplungsabschnitt der Beschickungsstation, angebracht werden kann. Das eigenständige Lademodul ist dabei derartig geformt, dass es auch in den bestehenden Kopplungsabschnitt einer Beschickungsstation angeordnet werden kann, sodass eine Funktionseinheit zwischen der Beschickungsstation und dem eigenständigen Lademodul entsteht. Hierdurch lassen sich bestehende Beschickungssysteme bei Bedarf einfach und schnell mit einer Ladevorrichtung nachrüsten.

Zweckmäßigerweise weist das Lademodul einen, vorzugsweise dem Kopplungsabschnitt der Beschickungsstation entsprechenden, Kopplungsabschnitt zur Kopplung eines Transportwagens auf. Der Kopplungsabschnitt des Lademoduls verfügt über die gleichen Merkmale des Kopplungsabschnitts der Beschickungsstation, sodass ein Transportwagen in der gleichen Art und Weise mit dem Lademodul gekoppelt werden kann, wie mit der Beschickungsstation selbst. Auf diese Art und Weise lässt sich das Lademodul besonders einfach in das Beschickungssystem integrieren, ohne Änderungen an den Transportwagen, der Beschickungsstation bzw. den Werkstückhalter vornehmen zu müssen.

Weiterbildend weist die Beschickungsstation mehrere Kopplungsabschnitte auf. Bevorzugt ist dabei, dass wenigstens ein weiterer Kopplungsabschnitt neben dem bereits vorhandenen Kopplungsabschnitt angeordnet ist. Hierdurch kann erreicht werden, dass ein Werkstückhalter in einer Halteposition eines, mit einem weiteren Kopplungsabschnitt gekoppelten Transportwagens, sich ebenfalls in einer definierten Aufnahmeposition zum Roboterbefestigungsabschnitt befindet. Eine derartige Anordnung erlaubt es beispielsweise, dass mithilfe des Beschickungssystems Werkstücke von einem Werkstückhalter aufgenommen, in der Vorrichtung abgesetzt, und danach auf einem anderen Werkstückhalter verbracht werden können. Dies ist insbesondere dann vorteilhaft, wenn sich die Form des Werkstücks in der Vorrichtung derart verändert hat, dass das Werkstück nicht mehr auf den ursprünglichen Werkstückhalter abgesetzt werden kann.

Weiterbildend weist die Beschickungsstation wenigstens einen weiteren Roboterbefestigungsabschnitt auf, der je zur Befestigung eines weiteren Roboters geeignet ist. In einer derartigen Anordnung kann eine Vorrichtung durch das Beschickungssystem mit einzelnen Werkstücken in kürzerer Zeit beschickt, und somit die Produktionsgeschwindigkeit gesteigert werden. Gleichzeitig ist es möglich die Vorrichtung mit mehreren, auch unterschiedlichen Werkstücken gleichzeitig zu beschicken. Dies kann beispielsweise dann erfolgen, wenn mehrere Werkstücke in der Vorrichtung zu einem neuen Werkstück zusammengefügt werden.

Es ist zweckmäßig, wenn der Kopplungsabschnitt eine Einschubvorrichtung für Werkstückhalter aufweist. Die Einschubvorrichtung kann beispielsweise in Form von zwei Haltearmen ausgebildet sein. Mit deren Hilfe kann nach dem Koppeln des Transportwagens mit dem Kopplungsabschnitt nachträglich ein Werkstückhalter in einer Halteposition auf dem Transportwagen positioniert werden. Gleichzeitig ist es auch möglich, aus einem mit dem Kopplungsabschnitt gekoppelten Transportwagen einen Werkstückhalter aus der Halteposition zu entnehmen. Eine derartige Vorrichtung erlaubt es, im Produktionsprozess einzelne Werkstückhalter auch im gekoppelten Zustand, beispielsweise für eine Qualitätskontrolle, aus dem Transportwagen zu entnehmen bzw. einen weiteren Werkstückhalter in eine Halteposition einzusetzen. Auch ist es möglich, beispielsweise zugelieferte Werkstücke manuell auf den Transportwagen zu laden.

Das Verfahren zur Beschickung einer Vorrichtung mit Werkstücken mittels des oben beschriebenen Beschickungssystems umfasst folgende Verfahrensschritte:
a) Beladen eines Transportwagens mit wenigstens einem Werkstückhalter sowie mit wenigstens einem Werkstück,
b) Verfahren des Transportwagens zu einer Beschickungsstation,
c) Koppeln des Transportwagens mit einem Kopplungsabschnitt der Beschickungsstation,
d) wobei nach dem Koppeln in Verfahrensschritt c) das wenigstens eine Werkstück durch den Roboter entnommen, und die Vorrichtung damit durch den Roboter beschickt wird, wobei das Verfahren unter Zwischenschaltung eines Bewegens wenigstens eines Werkstückhalters von der Halteposition in die Aufnahmeposition durch die Ladevorrichtung abläuft.

Unter Bewegen wird hier beispielsweise eine horizontale und/oder vertikale Bewegung des Werkstückhalters mit oder ohne darauf befindlichen Werkstücken verstanden. Durch die Zwischenschaltung eines Bewegens können auch solche Werkstückhalter in eine Aufnahmeposition verbracht werden, die sich nach dem Koppeln des Transportwagens mit dem Kopplungsabschnitt nicht unmittelbar in der definierten Aufnahmeposition befinden. Dies ist insbesondere dann vorteilhaft, wenn der Transportwagen mit mehreren Werkstückhalter in unterschiedlichen Haltevorrichtungen beladen ist. Dies ist vorteilhaft, da sich die Kapazität des Transportwagens erhöhen lässt.

Weiter kann der Verfahrensschritt a) in einer weiteren Beschickungsstation durch einen Roboter und/oder manuell erfolgen. Entsprechend kann die Beladung des Transportwagens mit Werkstückhaltern und darauf befindlichen Werkstücken in einer Halteposition sowohl automatisiert als auch manuell erfolgen. So lässt sich das Beschickungssystem besonders flexibel an die jeweiligen wirtschaftlichen Rahmenbedingungen eines Auftrags anpassen.

Bevorzugt kann das Verfahren in umgekehrter Reihenfolge zur Beschickung eines Transportwagens durchgeführt werden. Hierdurch lassen sich automatisiert Werkstücke aus der Vorrichtung herausnehmen und wieder auf dem Werkstückhalter des mit dem Kopplungsabschnitt gekoppelten Transportwagens absetzen. Nach dem Entkoppeln des Transportwagens kann dieser mit dem darauf befindlichen Werkstückhalter und Werkstücken weiter beispielsweise zu einer anderen Beschickungsstation verfahren werden.

Weiter umfasst die Erfindung eine Verwendung des oben beschriebenen erfindungsgemäßen Beschickungssystems zur Beschickung einer Vorrichtung. Insbesondere in Produktions- bzw. Logistikprozessen wird eine erfindungsgemäßes Beschickungssystem eingesetzt um eine Vorrichtung mit Werkstücken zu beschicken, beispielsweise zu deren Bearbeitung. Auch lassen sich Werkstücke einfach von einer Vorrichtung zu einer weiteren zu transportieren.

Nachfolgend wird die Erfindung anhand von in den Zeichnungen beschriebenen Ausführungsbeispielen näher erläutert. Hierbei zeigen schematisch:
- Fig. 1: ein erstes Ausführungsbeispiel eines Beschickungssystems vor dem Koppeln eines Transportwagens mit einem Kopplungsabschnitt;
- Fig. 2: das erste Ausführungsbeispiel des Beschickungssystems mit einem im Kopplungsabschnitt gekoppelten Transportwagen;
- Fig. 3: ein zweites Ausführungsbeispiel des Beschickungssystems mit integrierter Ladevorrichtung;
- Fig. 4: ein drittes Ausführungsbeispiel des Beschickungssystems mit einem nachrüstbaren Lademodul, vor der Nachrüstung;
- Fig. 5: das dritte Ausführungsbeispiel des Beschickungssystems mit dem nachgerüsteten Lademodul, vor dem Koppeln des Transportwagens;
- Fig. 6: das dritte Ausführungsbeispiel des Beschickungssystems mit dem nachgerüsteten Lademodul und mit einem gekoppelten Transportwagen;
- Fig. 7: das dritte Ausführungsbeispiel des Beschickungssystems bei der manuellen Beladung über die Einschubvorrichtung;
- Fig. 8: das dritte Ausführungsbeispiel des Beschickungssystems in einer alternativen Anwendungsform;
- Fig. 9: ein viertes Ausführungsbeispiel des Beschickungssystems mit zwei Kopplungsabschnitten.
- Fig. 10: ein fünftes Ausführungsbeispiel des Beschickungssystems mit vier Kopplungsabschnitten sowie zwei Roboterbefestigungsabschnitten;
- Fig. 11: eine perspektivische Ansicht einer Beschickungsstation eines Beschickungssystems nach dem ersten Ausführungsbeispiel, jedoch ohne Roboter;
- Fig. 12: eine Detailansicht der seitlichen Führung der in Fig. 11 gezeigten Beschickungsstation.

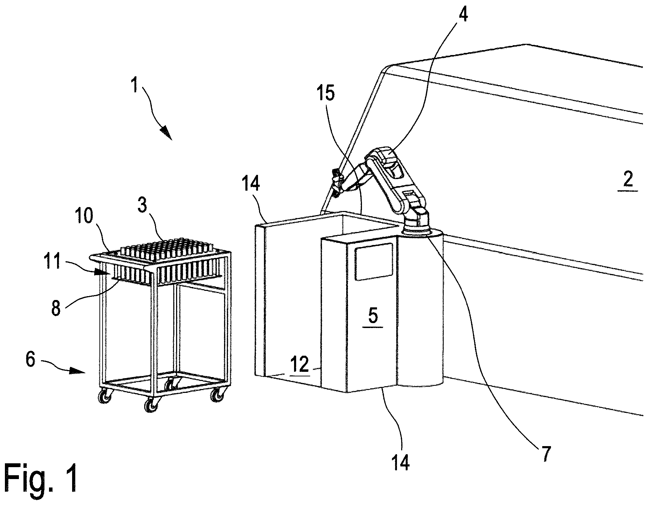

Fig. 1 zeigt ein erfindungsgemäßes Beschickungssystem 1, bestehend aus einer Beschickungsstation 5 sowie einem Transportwagen 6. Die Beschickungsstation 5 weist einen Roboterbefestigungsabschnitt 7 auf. Weiter verfügt die Beschickungsstation 5 über einen Kopplungsabschnitt 12 sowie zwei seitliche Führungen 14 sowie einen stirnseitigen Anschlag 15. Auf dem Roboterbefestigungsabschnitt 7 ist weiter ein Roboter 4 montiert. Weiter ist in Fig. 1 der Transportwagen 6 dargestellt, bevor er mit dem Kopplungsabschnitt 12 gekoppelt wird. Der Transportwagen 6 verfügt über eine Haltevorrichtung 10, in welcher sich ein Werkstückhalter 8 in einer Halteposition 11 befindet. Auf dem Werkstückhalter 8 ist eine Vielzahl von Werkstücken 3 angeordnet. Das dargestellte Beschickungssystem 1 ist weiter neben einer Vorrichtung 2 in Form einer Fertigungsmaschine positioniert.

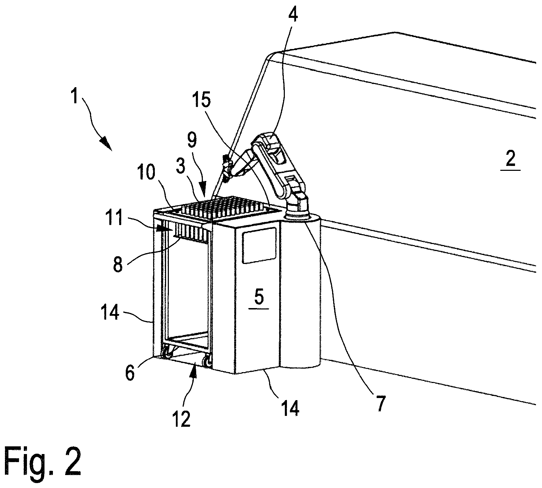

In Fig. 2 ist das in Fig. 1 gezeigte Beschickungssystem 1 abgebildet, wobei im Unterschied zu Fig. 1 der Transportwagen 6 mit dem Kopplungsabschnitt 12 der Beschickungsstation 5 gekoppelt ist. Weiter befindet sich der in der Haltevorrichtung 10 des Transportwagens 6 fixierte Werkstückhalter 8 mit einer Vielzahl darauf befindlicher Werkstücke 3 in einer Aufnahmeposition 9 bezüglich des Roboterbefestigungsabschnitts 7 sowie dem darauf montierten Roboter 4.

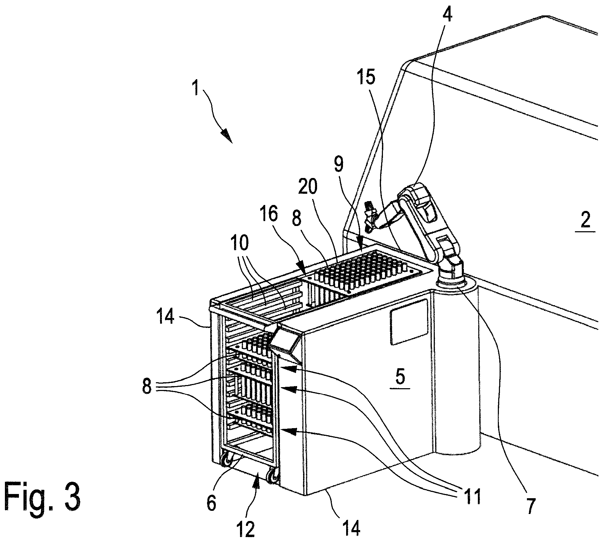

Eine zweite Ausführungsform des Beschickungssystems ist in Fig. 3 dargestellt. Diese zeigt eine Beschickungsstation 5 mit einer Ladevorrichtung 16. Weiter ist der Transportwagen 6 mit dem Kopplungsabschnitt 12 gekoppelt. Der Kopplungsabschnitt 12 der Beschickungsstation 5 wird durch zwei seitliche Führungen 14 sowie einen stirnseitigen Anschlag 15 gebildet. Auf dem Roboterbefestigungsabschnitt 7 ist ein Roboter 4 montiert, wobei der Roboterbefestigungsabschnitt 7 dem des ersten Ausführungsbeispiels entspricht. Der mit dem Kopplungsabschnitt 12 gekoppelte Transportwagen 6 verfügt über eine Vielzahl von Haltevorrichtungen 10, welche in Form von Halteschienen horizontal in verschiedenen Höhen am Transportwagen 6 angeordnet sind. In drei der Haltevorrichtungen 10 befinden sich in verschiedener Höhe drei Werkstückhalter 8 in jeweils einer Halteposition 11 im Transportwagen 6. Ein weiterer Werkstückhalter 8 ist von der Ladevorrichtung 16 in eine Aufnahmeposition 9 relativ zum Roboterbefestigungsabschnitt 7 positioniert, sodass der Roboter 4 die auf dem weiteren Werkstückhalter 8 angeordneten Werkstücke 3 aufnehmen kann. Das dargestellte Beschickungssystem 1 ist weiter neben einer Vorrichtung 2 in Form einer Fertigungsmaschine positioniert.

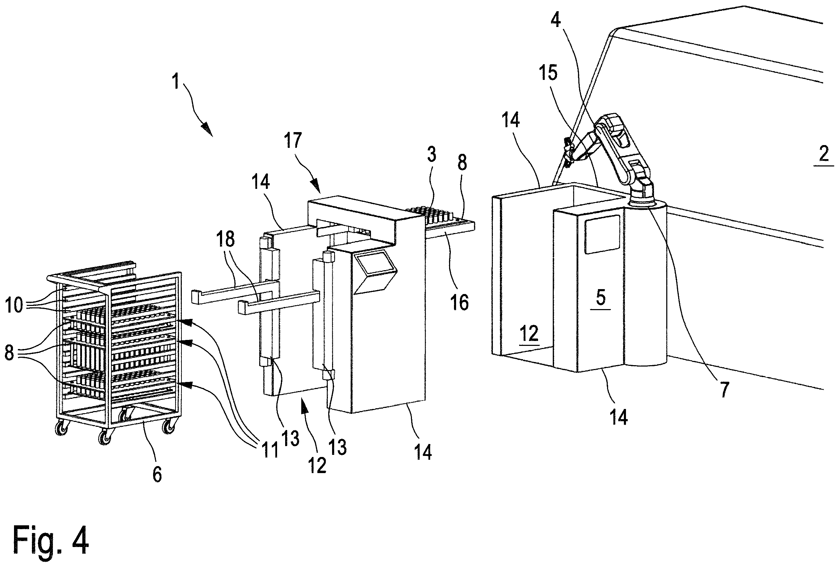

In Fig. 4 wird als dritte Ausführungsform ein Beschickungssystem 1 dargestellt, welches aus einer Beschickungsstation 5, einem Transportwagen 6 sowie einem Lademodul 17 besteht. Fig. 4 zeigt das Lademodul 17 und die Beschickungsstation 5, bevor diese zu einer Einheit zusammengefügt sind. Die Beschickungsstation 5 entspricht der Beschickungsstation nach der ersten Ausführungsform. Das Lademodul 17 besteht aus zwei seitlichen Führungen 14. Zwischen den seitlichen Führungen 14 ist die Ladevorrichtung 16 angeordnet. Zur Veranschaulichung des Funktionsprinzips der Ladevorrichtung 16 ist auf der Ladevorrichtung 16 ein Werkstückhalter 8 mit Werkstücken 3 gelagert. Weiter verfügt das Lademodul 17 jeweils an den seitlichen Führungen 14 über eine Kopplungsvorrichtung 13 sowie je eine Einschubvorrichtung 18. Der abgebildete Transportwagen 6 weist mehrere Haltevorrichtungen 10 auf, welche jeweils über die Höhe des Transportwagens 6 verteilt, am Transportwagen 6 angebracht sind. In dem Transportwagen 6 sind drei Werkstückhalter 8 in einer Halteposition 11 angeordnet. Das dargestellte Beschickungssystem 1 ist weiter neben einer Vorrichtung 2 in Form einer Fertigungsmaschine positioniert.

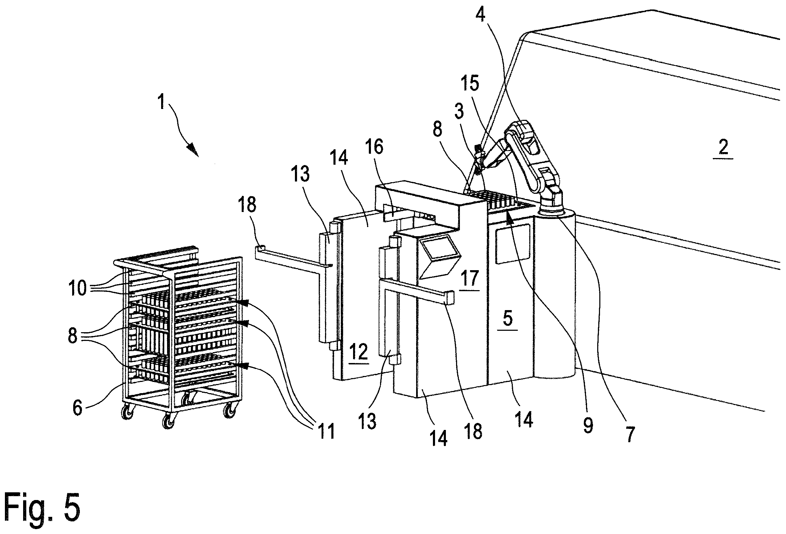

In Fig. 5 ist das Beschickungssystem 1 in der als dritten Ausführungsform gezeigten Variante, bestehend aus einer Beschickungsstation 5, einem Lademodul 17 sowie einem Transportwagen 6 gezeigt. Im Gegensatz zu Fig. 4 ist in Fig. 5 die Beschickungsstation 5 sowie das Lademodul 17 bereits zu einer Funktionseinheit zusammengefügt, d. h., die Beschickungsstation 5 ist mit einer Ladevorrichtung 16 nachgerüstet. Das in Fig. 5 dargestellte Beschickungssystem 1 zeigt weiter den Transportwagen 6, bevor dieser mit dem Kopplungsabschnitt 12 der nachgerüsteten Beschickungsstation 5 gekoppelt wird. Es ist erkennbar, dass sich ein Werkstückhalter 8 mit mehreren Werkstücken 3 in einer Aufnahmeposition 9 relativ zum Roboterbefestigungsabschnitt 7 befindet, sodass der auf dem Roboterbefestigungsabschnitt 7 montierte Roboter 4 Werkstücke 3 entnehmen kann. Weiter befinden sich zwei Kopplungsvorrichtungen 13 in einer geöffneten Position, in welcher der Transportwagen 6 in den Kopplungsabschnitt 12 geschoben werden kann.

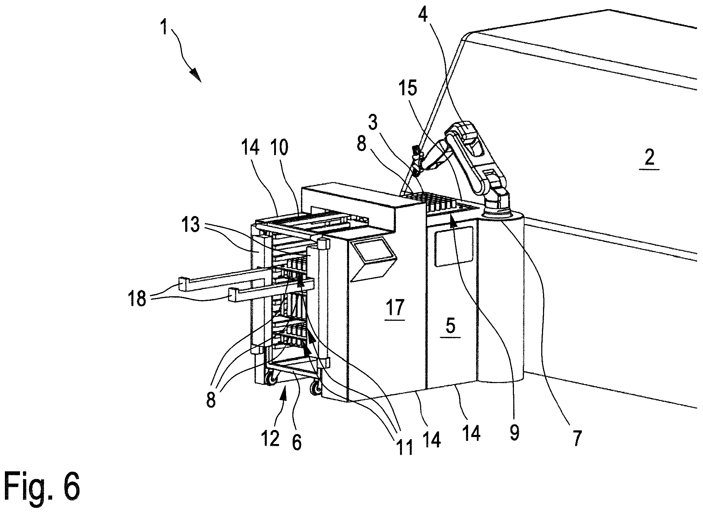

In Fig. 6 ist ebenfalls das Beschickungssystem 1 in der als dritten Ausführungsform gezeigten Variante dargestellt. Im Unterschied zu Fig. 5 ist in Fig. 6 der Transportwagen 6 mit dem Kopplungsabschnitt 12 des Lademoduls 17 gekoppelt. Hierfür sind die zwei Kopplungsvorrichtungen 13 in einer geschlossenen Stellung, die ein Herausrollen des Transportwagens 6 aus dem Kopplungsabschnitt 12 verhindern.

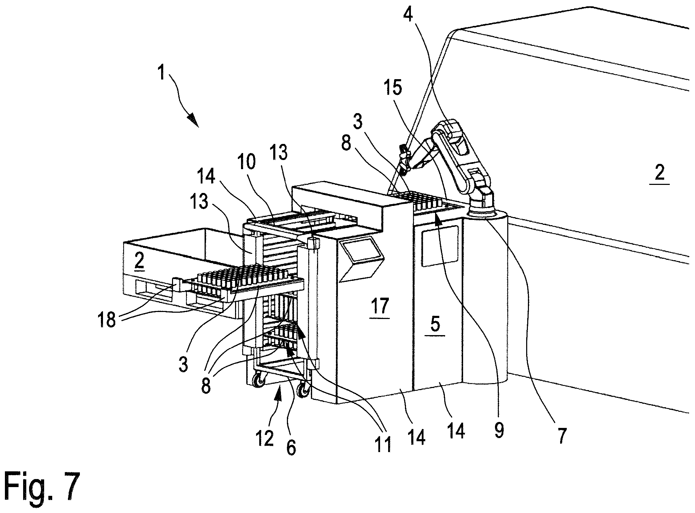

Fig. 7 zeigt eine Anwendungsform des erfindungsgemäßen Beschickungssystems 1 nach dem dritten Ausführungsbeispiel. Zu erkennen ist, dass auf den zwei Einschubvorrichtungen 18 ein Werkstückhalter 8 mit Werkstücken 3 positioniert ist. Weiter gezeigt ist eine Vorrichtung 2, hier eine Palette, aus welcher zugelieferte Werkstücke 3 entnommen werden, und auf den von den zwei Einschubvorrichtungen 18 gehaltenen Werkstückhaltern 7 eingesetzt sind. Das dargestellte Beschickungssystem 1 ist zudem neben einer weiteren Vorrichtung 2 in Form einer Fertigungsmaschine positioniert.

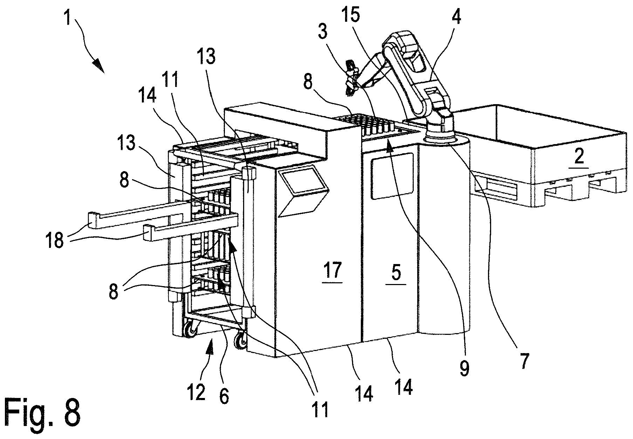

In Fig. 8 wird ein weiteres Anwendungsbeispiel des Beschickungssystems 1 gezeigt. Das dargestellte Beschickungssystem 1 ist neben einer Vorrichtung 2, hier eine Palette, positioniert. Auch wenn das abgebildete Beschickungssystem 1 ein Beschickungssystem der dritten Ausführungsform darstellt, kann das gezeigte Anwendungsbeispiel auch mit einem Beschickungssystem 1 nach jeder der gezeigten Ausführungsformen erfolgen. In Fig. 8 wird gezeigt, wie Werkstücke 3 vom Werkstückhalter 8 aus ihrer Aufnahmeposition 9 durch den auf dem Roboterbefestigungsabschnitt 7 montierter Roboter 4 entnommen und in der Vorrichtung 2 abgesetzt werden.

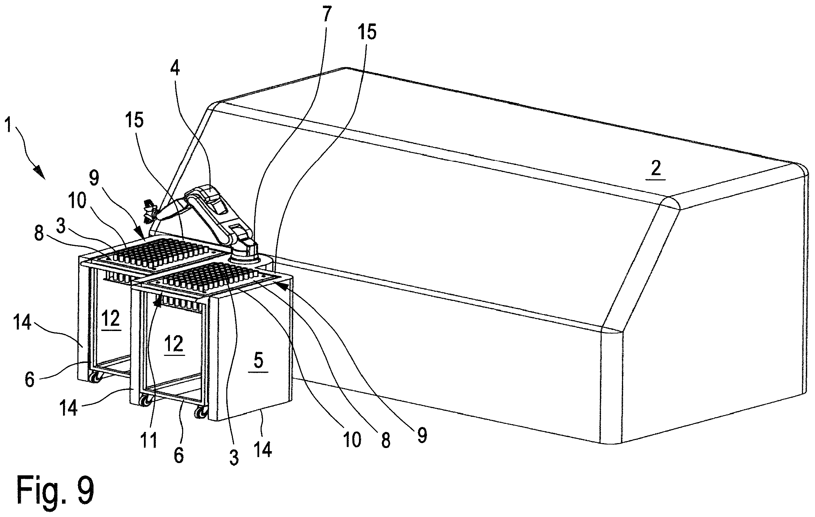

In Fig. 9 ist ein Beschickungssystem in einer vierten Ausführungsform gezeigt. Darin weist das Beschickungssystem 1 eine Beschickungsstation 5 mit zwei Kopplungsabschnitten 12 auf. Weiter verfügt die Beschickungsstation 5 über einen Roboterbefestigungsabschnitt 7, auf welchem ein Roboter 4 montiert ist. Jeder der zwei Kopplungsabschnitte 12 ist mit einem Transportwagen 6 gekoppelt, sodass sich die auf den Haltevorrichtungen 10 der Transportwagen 6 befindlichen Werkstückhalter 8 mit Werkstücken 3 jeweils in einer Aufnahmeposition 9 bezüglich des Roboterbefestigungsabschnitts 7 befinden. Weiter ist das Beschickungssystem 1 bei einer Vorrichtung 2, hier eine Bearbeitungsmaschine, angeordnet.

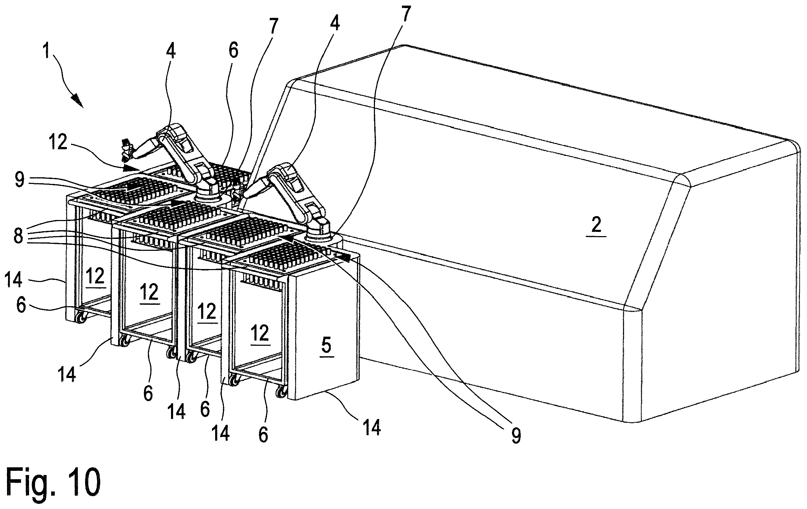

Fig. 10 zeigt ein Beschickungssystem in einer fünften Ausführungsform. Hierin weist die Beschickungsstation 5 vier Kopplungsabschnitte 12 auf, wobei mit jedem der vier Kopplungsabschnitte 12 ein Transportwagen 6 mit Werkstückhaltern 8 und Werkstücken 3 gekoppelt ist. Ein weiterer Transportwagen 6 ist zudem an einem seitlichen, fünften Kopplungsabschnitte 12 gekoppelt. Die fünfte Ausführungsform des Beschickungssystems verfügt ferner über zwei Roboterbefestigungsabschnitte 7, wobei auf jedem der zwei Roboterbefestigungsabschnitte 7 ein Roboter 4 montiert ist. Die Roboterbefestigungsabschnitte 7 sind jeweils zwischen zwei Kopplungsabschnitten 12 positioniert, sodass sich jeweils zwei der vier Werkstückhalter 8 in einer Aufnahmeposition 9 relativ zu einem der beiden Roboterbefestigungsabschnitte 7 befinden. Weiter ist das Beschickungssystem 1 bei einer Vorrichtung 2 angeordnet.

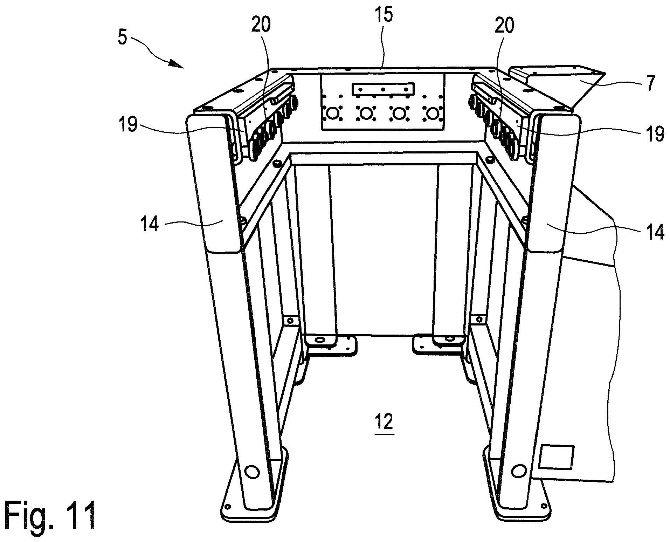

Fig. 11 zeigt eine Beschickungsstation 5 eines Beschickungssystems 1 nach dem ersten Ausführungsbeispiel. Die Beschickungsstation 5 weist zwei seitliche Führungen 14 sowie einen stirnseitigen Anschlag 15 auf. Die seitlichen Führungen 14 sowie der stirnseitige Anschlag 15 umschließen den Kopplungsabschnitt 12 von drei Seiten. Weiter gezeigt ist der Roboterbefestigungsabschnitt 7. Im Gegensatz zu der in Fig. 1 gezeigten Beschickungsstation 5 ist auf dem Roboterbefestigungsabschnitt 7 kein Roboter 4 montiert. Darüber hinaus sind an jeder der zwei seitlichen Führungen 14 je eine seitliche Führungsschiene 19 sowie mehrere seitliche Führungsrollen 20 dargestellt. Die seitlichen Führungen 19 sowie die seitlichen Führungsrollen 20 sind an der, dem Kopplungsabschnitt 12 zugewandten Seite der seitlichen Führungen 14 angeordnet.

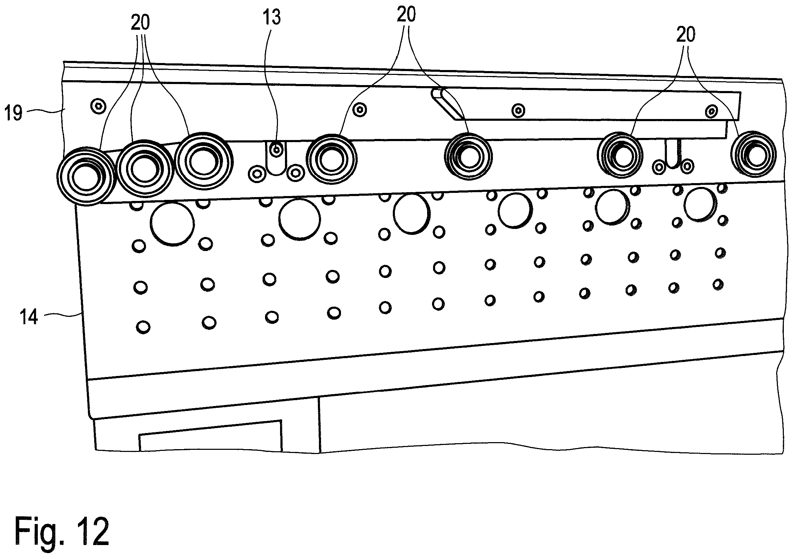

Fig. 12 ist eine Detailansicht einer seitlichen Führung 14 der in Fig. 11 gezeigten Beschickungsstation 5. Darauf zu erkennen sind sieben seitliche Führungsrollen 20 sowie eine seitliche Führungsschiene 19. Darüber hinaus ist die Kopplungsvorrichtung 13 in Form eines Schließzylinders gezeigt. Dieser kann durch Hervorfahren ein Herausrollen des Transportwagens 6 (nicht gezeigt) aus dem Kopplungsabschnitt 12 verhindern.

Ferner kann man insbesondere in Fig. 12 gut erkennen, dass die ersten drei Führungsrollen 20 - also die am weitesten vom stirnseitigen Anschlag 15 entfernten Führungsrollen - in vertikaler Richtung gesehen nach unten versetzt gegenüber den hinteren vier Führungsrollen 20 sind. Insbesondere sind die ersten drei Führungsrollen 20 in einem leicht ansteigenden Winkel von vorzugsweise höchstens 10° angeordnet. Durch diese Anordnung wird der Transportwagen 6 vom Boden abgehoben, wenn er in den Kopplungsabschnitt 12 verbracht wird. So kann gewährleistet werden, dass die auf dem Transportwagen 6 angeordneten Werkstücke 3 sich immer auf der gleichen Höhe befinden und nicht durch beispielsweise am Boden befindliche Metallstücke oder Abfall ein ungewollter Höhenunterschied entsteht.

### BEZUGSZEICHEN

- 1.: Beschickungssystem
- 2.: Vorrichtung
- 3.: Werkstück
- 4.: Roboter
- 5.: Beschickungsstation
- 6.: Transportwagen
- 7.: Roboterbefestigungsabschnitt
- 8.: Werkstückhalter
- 9.: Aufnahmeposition
- 10.: Haltevorrichtung
- 11.: Halteposition
- 12.: Kopplungsabschnitt
- 13.: Kopplungsvorrichtung
- 14.: Seitliche Führung
- 15.: Stirnseitiger Anschlag
- 16.: Ladevorrichtung
- 17.: Lademodul
- 18.: Einschubvorrichtung
- 19.: Seitliche Führungsschiene
- 20.: Seitliche Führungsrolle

## Patentansprüche

1. Beschickungssystem (1) zur Beschickung einer Vorrichtung (2) mit Werkstücken (3) mittels eines Roboters (4),
wobei das Beschickungssystem (1) eine Beschickungsstation (5) und wenigstens einen Transportwagen (6) aufweist,
wobei die Beschickungsstation (5) einen Roboterbefestigungsabschnitt (7) aufweist und so ausgebildet ist, dass in ihr ein Werkstückhalter (8) zum Roboterbefestigungsabschnitt (7) unverschieblich und in einer definierten Aufnahmeposition (9) reproduzierbar gehalten werden kann, aus der heraus ein, am Roboterbefestigungsabschnitt (7) angebrachter Roboter (4) die Werkstücke (3) greifen kann,
wobei der Transportwagen (6) über wenigstens eine Haltevorrichtung (10) zur Halterung eines Werkstückhalters (8) in einer Halteposition (11) verfügt,
wobei die Beschickungsstation (5) eine Ladevorrichtung (16) aufweist, mit der ein Werkstückhalter (8) indirekt aus der Halteposition (11) in die Aufnahmeposition (9) in der Beschickungsstation (5) verbracht werden kann, wobei die Ladevorrichtung (16) so ausgebildet ist, dass sie einen Werkstückhalter (8) schieben und/oder ziehen kann und die Beschickungsstation (5) einen Kopplungsabschnitt (12) aufweist, über den der Transportwagen (6) mit Hilfe einer Kopplungsvorrichtung (13) so mit der Beschickungsstation (5) koppelbar ist, dass ein im Transportwagen (6) in der Halteposition (11) gehaltener Werkstückhalter (8) nach dem Koppeln des Transportwagens (6) mit dem Kopplungsabschnitt (12) mit einer horizontalen und/oder vertikalen Bewegung des Werkstückhalters (8) in die Aufnahmeposition (9) verbracht worden ist.

2. Beschickungssystem (1) nach Anspruch 1,
**dadurch gekennzeichnet, dass**
der Kopplungsabschnitt (12) wenigstens eine seitliche Führung (14), bevorzugt zwei seitliche Führungen (14) für den Transportwagen (6) aufweist.

3. Beschickungssystem (1) nach Anspruch 1 oder 2,
**dadurch gekennzeichnet, dass**
der Kopplungsabschnitt (12) wenigstens einen stirnseitigen Anschlag (15) aufweist.

4. Beschickungssystem (1) nach Anspruch 2,
**dadurch gekennzeichnet, dass**
die wenigstens eine seitliche Führung (14) wenigstens eine seitliche Führungsschiene (19) und/oder wenigstens eine seitliche Führungsrolle (20) aufweist.

5. Beschickungssystem (1) nach einem der vorhergehenden Ansprüche,
**dadurch gekennzeichnet, dass**
die Kopplungsvorrichtung (13) am Kopplungsabschnitt (12) der Beschickungsstation (5) und/oder am Transportwagen (6) vorgesehen ist.

6. Beschickungssystem (1) nach einem der vorhergehenden Ansprüche,
**dadurch gekennzeichnet, dass**
der Transportwagen (6) mehrere, in unterschiedlichen Höhen des Transportwagens (6) angeordnete Haltevorrichtungen (10) zur Halterung von Werkstückhaltern (8) in unterschiedlichen Haltepositionen (11) im Transportwagen (6) aufweist.

7. Beschickungssystem (1) nach einem der vorhergehenden Ansprüche,
**dadurch gekennzeichnet, dass**
die Ladevorrichtung (16) als eigenständiges Lademodul (17) ausgebildet ist, das an der Beschickungsstation (5), vorzugsweise direkt am Kopplungsabschnitt (12) der Beschickungsstation (5), angebracht werden kann.

8. Beschickungssystem (1) nach einem der vorhergehenden Ansprüche,
**dadurch gekennzeichnet, dass**
das Lademodul (17) einen, vorzugsweise dem Kopplungsabschnitt (12) der Beschickungsstation (5) entsprechenden, Kopplungsabschnitt (12) zur Kopplung eines Transportwagens (6) aufweist.

9. Beschickungssystem (1) nach einem der vorhergehenden Ansprüche,
**dadurch gekennzeichnet, dass**
die Beschickungsstation (5) mehrere Kopplungsabschnitte (12) aufweist.

10. Beschickungssystem (1) nach einem der vorhergehenden Ansprüche,
**dadurch gekennzeichnet, dass**
die Beschickungsstation (5) wenigstens einen weiteren Roboterbefestigungsabschnitt (7) aufweist, der je zur Befestigung eines weiteren Roboters (4) geeignet ist.

11. Beschickungssystem (1) nach einem der vorhergehenden Ansprüche,
**dadurch gekennzeichnet, dass**
der Kopplungsabschnitt (12) eine Einschubvorrichtung (18) für Werkstückhalter (8) aufweist.

12. Verfahren zur Beschickung einer Vorrichtung (2) mit Werkstücken (3) mittels des Beschickungssystems nach einem der vorhergehenden Ansprüche, wobei das Verfahren folgende Verfahrensschritte aufweist:
a) Beladen des Transportwagens (6) mit wenigstens einem Werkstückhalter (8) sowie mit wenigstens einem Werkstück (3),
b) Verfahren des Transportwagens (6) zu der Beschickungsstation (5),
c) Koppeln des Transportwagens (6) mit dem Kopplungsabschnitt (12) der Beschickungsstation (5),
d) wobei nach dem Koppeln in Verfahrensschritt c) das wenigstens eine Werkstück (3) durch den Roboter (4) entnommen, und die Vorrichtung (2) damit durch den Roboter (4) beschickt wird, wobei das Verfahren unter Zwischenschaltung eines Bewegens wenigstens eines Werkstückhalters (8) von der Halteposition (11) in die Aufnahmeposition (9) durch die Ladevorrichtung (16) abläuft.

13. Verfahren nach Anspruch 12,
**dadurch gekennzeichnet, dass**
der Verfahrensschritt a) in einer weiteren Beschickungsstation (5) durch einen Roboter (4) und/oder manuell erfolgt.

14. Verfahren nach einem nach Anspruch 12 oder 13,
**dadurch gekennzeichnet, dass**
das Verfahren in umgekehrter Reihenfolge zur Beschickung eines Transportwagens (6) durchgeführt wird.

15. Verwendung eines Beschickungssystems (1) nach einem der vorhergehenden Vorrichtungsansprüche zur Beschickung einer Vorrichtung (2).

## Claims

1. A feed system (1) for feeding a device (2) with workpieces (3) by means of a robot (4),
wherein the feed system (1) comprises a feeding station (5) and at least one transport carriage (6),
wherein the feeding station (5) has a robot fastening section (7) and is designed in such a way that a workpiece holder (8) can be reproducibly held in it unmovably and in a defined receiving position (9) relative to the robot fastening section (7) from which a robot (4) mounted to the robot fastening section (7) can grasp the workpieces (3),
wherein the transport carriage (6) has at least one holding device (10) for holding a workpiece holder (8) in a holding position (11),
wherein the feeding station (5) has a loading device (16) with which a workpiece holder (8) can be brought indirectly from the holding position (11) into the receiving position (9) in the feeding station (5), wherein the loading device (16) is designed such that it can push and/or pull a workpiece holder (8) and the feeding station (5) has a coupling section (12) through which the transport carriage (6) can be coupled with the aid of a coupling device (13) with the feeding station (5) such that a workpiece holder (8) held in the transport carriage (6) in the holding position (11) after the coupling of the transport carriage (6) with the coupling section (12) has been brought into the receiving position (9) with a horizontal and/or vertical movement of the workpiece holder (8).

2. The feed system (1) according to claim 1,
**characterized in that**
the coupling section (12) has at least one lateral guide (14), preferably two lateral guides (14) for the transport carriage (6).

3. The feed system (1) according to claim 1 or 2,
**characterized in that**
the coupling section (12) has at least one end-side stop (15).

4. The feed system (1) according to claim 2,
**characterized in that**
the at least one lateral guide (14) has at least one lateral guide rail (19) and/or at least one lateral guide roller (20).

5. The feed system (1) according to one of the preceding claims,
**characterized in that**
the coupling device (13) is provided on the coupling section (12) of the feeding station (5) and/or on the transport carriage (6).

6. The feed system (1) according to one of the preceding claims,
**characterized in that**
the transport carriage (6) has a plurality of holding devices (10) arranged at different heights of the transport carriage (6) for holding workpiece holders (8) in different holding positions (11) in the transport carriage (6).

7. The feed system (1) according to one of the preceding claims,
**characterized in that**
the loading device (16) is designed as an independent load module (17) that can be mounted on the feeding station (5), preferably directly on the coupling section (12) of the feeding station (5).

8. The feed system (1) according to one of the preceding claims,
**characterized in that**
the load module (17) has a coupling section (12), preferably corresponding to the coupling section (12) of the feeding station (5), for coupling of a transport carriage (6).

9. The feed system (1) according to one of the preceding claims,
**characterized in that**
the feeding station (5) has a plurality of coupling sections (12).

10. The feed system (1) according to one of the preceding claims,
**characterized in that**
the feeding station (5) has at least one more robot fastening section (7), each suitable for fastening another robot (4).

11. The feed system (1) according to one of the preceding claims,
**characterized in that**
the coupling section (12) has an insertion device (18) for workpiece holders (8).

12. A method for feeding a device (2) with workpieces (3) by means of the feed system according to one of the preceding claims, the method comprising the following procedural steps:
a) loading the transport carriage (6) with at least one workpiece holder (8) and with at least one workpiece (3),
b) moving the transport carriage (6) to the feeding station (5),
c) coupling the transport carriage (6) with the coupling section (12) of the feeding station (5),
d) wherein after the coupling in procedural step c) the at least one workpiece (3) is removed by the robot (4) and the device (2) is thereby fed by the robot (4), wherein the method takes place with interposition of a movement of at least one workpiece holder (8) from the holding position (11) to the receiving position (9) by the loading device (16).

13. The method according to claim 12,
**characterized in that**
the procedural step a) in a further feeding station (5) is done by a robot (4) and/or manually.

14. The method according to claim 12 or 13,
**characterized in that**
the method is performed in the reverse order to the feeding of a transport carriage (6).

15. Use of a feed system (1) according to one of the preceding device claims for feeding a device (2).

## Revendications

1. Système de chargement (1) pour charger un dispositif (2) de pièces (3) moyennant un robot (4), ledit système de chargement (1) comprenant une station de chargement (5) et au moins un chariot de transport 6),
ladite station de chargement (5) comprenant une partie de fixation de robot (7) et étant adaptée de telle façon qu'elle est apte à tenir dans celle-ci, de façon répétable, un porte-pièce (8) de façon immobile et dans une position de préhension (9) définie par rapport à ladite partie de fixation de robot (7) depuis laquelle un robot (4) attaché à ladite partie de fixation de robot (7) peut saisir les pièces (3),
ledit chariot de transport (6) étant doté d'au moins un dispositif porteur (10) pour porter un porte-pièce (8) dans une position de maintien (11),
ladite station de chargement (5) comprenant un dispositif de chargement (16) qui est apte à transférer un porte-pièce (8) de manière indirect depuis la position de maintien (11) vers la position de préhension (9) dans ladite station de chargement (5), ledit dispositif de chargement (16) étant adaptée de façon qu'elle est apte à pousser et/ou tirer un porte-pièce (8) et ladite station de chargement (5) comprenant une partie de couplage (12) qui est apte à coupler le chariot de transport (6) à ladite station de chargement (5) moyennant un dispositif de couplage (13) de façon qu'après le couplage du chariot de transport (6) à ladite partie de couplage (12) un porte-outil (8) porté par le chariot de transport (6) dans la position de maintien (11) a été transféré dans la position de préhension (9) moyennant un mouvement horizontal ou vertical du porte-pièce (8).

2. Système de chargement (1) selon la revendication 1,
**caractérisé en ce que**
ladite partie de couplage (12) comprend au moins un organe de guidage latéral (14), de préférence deux organes de guidage latéral (14) pour ledit chariot de transport (6).

3. Système de chargement (1) selon la revendication 1 ou 2,
**caractérisé en ce que**
ladite partie de couplage (12) comprend au moins une butée frontale (15).

4. Système de chargement (1) selon la revendication 2,
**caractérisé en ce que**
ledit au moins un organe de guidage latéral (14) comprend au moins un rail de guidage latéral (19) et/ou un rouleau de guidage latéral (20).

5. Système de chargement (1) selon l'une quelconque des revendications précédentes,
**caractérisé en ce que**
ledit dispositif de couplage (13) est prévu sur ladite partie de couplage (12) de ladite station de chargement (5) et/ou sur ledit chariot de transport (6).

6. Système de chargement (1) selon l'une quelconque des revendications précédentes,
**caractérisé en ce que**
ledit chariot de transport (6) comprend plusieurs dispositifs porteurs (10), qui sont disposés à des hauteurs différentes du chariot de transport (6), pour porter des porte-pièces (8) dans des positions différentes de maintien (11) dans le chariot de transport (6).

7. Système de chargement (1) selon l'une quelconque des revendications précédentes,
**caractérisé en ce que**
ledit dispositif de chargement (16) est réalisé en forme de module de chargement (17) autonome qui est apte à être attaché sur ladite station de chargement (5), de préférence directement sur ladite partie de couplage (12) de ladite station de chargement (5).

8. Système de chargement (1) selon l'une quelconque des revendications précédentes,
**caractérisé en ce que**
ledit module de chargement (17) comprend une partie de couplage (12), qui de préférence correspond à ladite partie de couplage (12) de ladite station de chargement (5), pour le couplage d'un chariot de transport (6).

9. Système de chargement (1) selon l'une quelconque des revendications précédentes,
**caractérisé en ce que**
ladite station de chargement (5) comprend plusieurs parties de couplage (12).

10. Système de chargement (1) selon l'une quelconque des revendications précédentes,
**caractérisé en ce que**
ladite station de chargement (5) comprend au moins une autre partie de fixation de robot (7) adaptée pour la fixation d'un autre robot (4).

11. Système de chargement (1) selon l'une quelconque des revendications précédentes,
**caractérisé en ce que**
ladite partie de couplage (12) comprend un dispositif d'insertion (18) pour porte-pièces (8).

12. Procédé pour charger un dispositif (2) de porte-pièces (3) en se servant du système de chargement (1) selon l'une quelconque des revendications précédentes, le procédé comprenant les étapes suivantes :
a) charger le chariot de transport (6) d'au moins un porte-pièce (8) et d'au moins une pièce (3),
b) déplacer le chariot de transport (6) à la station de chargement (5),
c) coupler le chariot de transport (6) à ladite partie de couplage (12) de la station de chargement (5),
d) après le couplage dans l'étape c), un retrait de ladite au moins une pièce (3) par le robot (4) et le chargement de celle-ci dans le dispositif (2) par le robot (4) étant effectué, le procédé étant mise en œuvre en interposant un déplacement d'au moins un porte-pièce (8) depuis la position de maintien (11) vers la position de préhension (9) moyennant le dispositif de chargement (16).

13. Procédé selon la revendication 12,
**caractérisé en ce que**
l'étape a) est effectuée dans une autre station de chargement (5) par le robot (4) ou de façon manuelle.

14. Procédé selon la revendication 12 ou 13,
**caractérisé en ce que**
pour le chargement d'un chariot de transport (6), le procédé est effectué en ordre inverse.

15. Utilisation d'un système de chargement (1) selon l'une quelconque des revendications de dispositif précédentes pour le chargement d'un dispositif (2).
